# EUROPEAN PATENT APPLICATION

(11) **EP 2 221 749 A1**
(43) Date of publication of application: **25.08.2010**
(21) Application number: 09153165.7
(22) Date of filing: 19.02.2009
(51) Int. Cl.: G06K 19/07, G06K 19/077, H01Q 7/00

(54) **RFID device having a permittivity dependent shunt structure**

(71) Applicant: NXP B.V., 5656 AG Eindhoven (NL)
(72) Inventor: Stockreiter, Christian, 5656 AG Eindhoven (NL)
(74) Representative: Krott, Michel

(57) **Abstract**

The invention relates to a RFID device including an antenna structure (1) on the surface of a layer (3) of a tag or embedded into the layer (3) of a tag, the layer (3) of the tag having a predefined permittivity and the antenna (1) having a shunt structure (7, 8, 9), wherein the structure of the antenna (5) is a loop structure and the shunt structure (7, 8, 9) is located within the loop structure.

## Description

### FIELD OF THE INVENTION

The invention relates to an RFID device according to the preamble of claim 1.

### BACKGROUND OF THE INVENTION

RFID devices such as tags are known as radio frequency identification devices which allow the identification of an element which is identified by the tag by using radio frequency energy and/or data signals which will be emitted by a reader and which initiate an emission of energy and/or data signals which allow to identify the tag by the reader.

Typically such RFID devices include an antenna for receiving and emitting energy and/or data signals and they include a RFID chip which is coupled to the antenna and which allows to process the data of the received energy and/or data signal to generate and send an own energy and/or data signal which allows to identify the tag by the reader.

In general it is known the UHF RFID has drawbacks regarding the performance of the RFID tags or labels if they are attached to material or packages or goods with high permittivity or with a high dielelectric constant.

The difficulty to match the chip and antenna impedances is an important issue since the antenna impedance is strongly influenced by the material of the antenna structure or the material on which the antenna is applied or mounted. The resulting mismatch between the impedance of the antenna and the impedance of the chip decreases the entire performance of the tag from a system approach.

Such RFID devices are known. WO 2004/093249 Al discloses a radio frequency identification (RFID) tag which includes an antenna configuration coupled to an RFID chip. The antenna structure is mounted on one face of a dielectric material, and includes compensation elements to compensate at least to some extend for various types of dielectric material upon which the antenna configuration may be mounted. The compensation structure includes a capacitor or a meander inductor. Furthermore it is proposed to place an additional conducting structure such as a ground plane or another conducting layer on a second major surface of the dielectric layer.

US 2006/0054710 Al discloses an RFID tag having a self-compensating antenna and conducting shields.

US 7397378 B1 discloses a tag for RFID applications having an antenna supported on a dielectric substrate and having a first electrical length suitable for communication as a transponder. Furthermore it has a selectively removable conductive shunt causes the antenna to assume a second electrical length which impedes transponder communication.

Furthermore US 2004/0201522 Al discloses an RFID tag including a surface insensitive antenna structure.

The above mentioned RFID tags show the disadvantage that the above mentioned mismatch of impedance of the antenna and of the chip is still there and the method described in the prior art are unfortunately sufficient to reduce the mismatch to an acceptable level. Furthermore actual UHF RFID label antennas are based on dual resonance concepts. The combination of conductive loops and dipoles with different resonance frequencies enables broadband matching of the integrated circuit (IC) and the antenna. Attaching these labels to dielectric materials (with relative permittivity > 1) results in a frequency shift of matching characteristic of IC and label antenna. As long as the bandwidth of the matching is sufficient the performance of the Tag stays nearly constant. Nevertheless in case of reduced bandwidth the performance decreases to a not acceptable level.

### OBJECT AND SUMMARY OF THE INVENTION

It is an object of the invention to create a RFID device or RFID tag which allows the identification of an element which is identified by the tag by using radio frequency energy and/or data signals and which shows a reduced mismatch such that the performance of the system is at least on an acceptable level.

The object of the invention will be solved by a RFID device according to the features of claim 1. The inventive RFID device includes an antenna structure on the surface of a layer of a tag or embedded into the layer of a tag, the layer of the tag having a predefined permittivity and the antenna having a shunt structure, **characterized in that** the structure of the antenna is a loop structure and the shunt structure is located within the loop structure.

According to the invention it is of advantage that the shunt structure contains a first area or arm and a second area or arm which are both interconnected by means of a connection element.

Accordingly it is of advantage that the first area or arm has a shape of a segment of a circle.

Accordingly it is of advantage that the connection element between the first area or arm and the second area or arm has a shape of a straight line or linear part.

Furthermore it is of advantage that the first and/or second area or arm is/are located in the vicinity of or adjacent to the loop structure of the antenna.

Another embodiment of the invention is such that the loop structure of the antenna has a shape of a circle or almost of a circle.

Additionally it is of advantage that the first and/or second area or arm of the shunt structure is coupled to the loop structure of the antenna by means of coupling using a capacitance coupling region. The capacitance coupling region is build between the area or arm of the shunt and the loop, preferably the circular loop.

Furthermore it is of advantage that the layer of the tag is made of a material of a varying permittivity.

Accordingly the coupling using the capacitance coupling region is increasing with increasing permittivity of the material of the layer.

### BRIEF DESCRIPTION OF THE DRAWINGS

The above and other features and advantages of the invention will be apparent from the following description of an exemplary embodiment of the invention with reference to the accompanying drawings, in which:
Fig. 1 shows a schematic view of an inventive antenna structure; and
Fig. 2 shows a diagram of the loop inductance as a function of permittivity.

### DESCRIPTION OF EMBODIMENTS

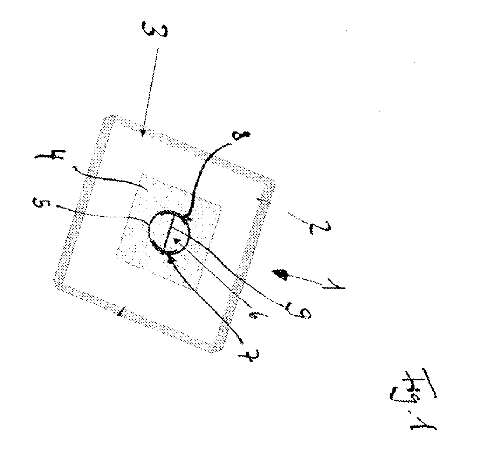

Figure 1 show schematically an antenna structure 1 according to the invention. The antenna 1 is located on the upper or lower surface 2 of a layer 3 of material or embedded within a layer of material with a varying permittivity.

The antenna 1 is located in a central region 4 of the layer 3 which may have the same or a different permittivity compared to the surrounding of the layer 3 material. According to another embodiment of the invention the antenna structure 1 might be located at an other position of the tag.

The antenna 1 has a circular shape 5 which contains at the inner area of the circular shape 5 a shunt structure 6. The shunt structure 6 shows two areas 7, 8 of a segment of a circle which are interconnected by a linear part 9. The two areas 7, 8 are in the neighborhood of the circular antenna loop 5. The inventive antenna has been created as a loop antenna having the shunt structure which is able to reduce the inductivity with increasing permittivity of the material of the layer 3. This behavior is provided by capacitive coupled shunt structures 7, 8. The two areas or arms 7, 8 of the shunt are coupled to the loop 5 via a capacitive coupling in the region where the shunt arms are almost coaxially aligned to the loop.

The coupling between shunt structures 7, 8 and antenna loop 5 increases with the materials permittivity of the layer 3. The shunt of the shunt structures 7, 8 bypasses the loop current and thus reduces the effective loop area. The reactive part of the loop input impedance becomes smaller. The resonance frequency shifts upwards which is in contrast to the frequency shift induced by the reduced phase number in the material.

Especially dual resonance antennas using loop and dipole are well suited for this approach.

The permittivity dependent shunt 7, 8 could compensate the frequency shift of the material influenced dipole by reducing the loop inductivity of the loop 5. If both effects are compensating each other, this would be the best case.

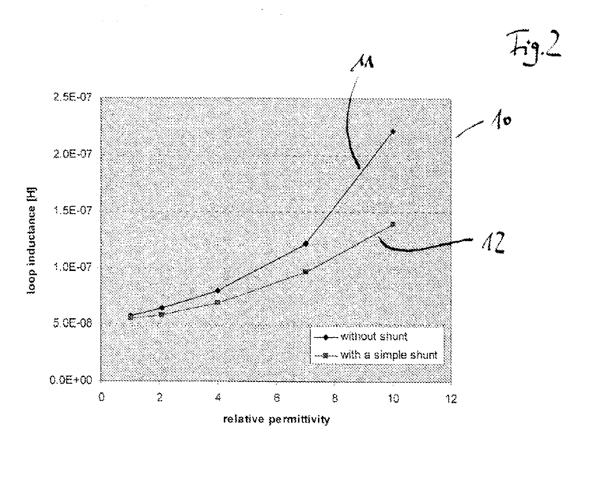

Even the very simple shunt structure shown in Fig. 1, has promising simulation results. Fig. 2 shows a diagram 10 of the loop inductance as a function of the permittivity. The diagram 10 shows two curves 11, 12 which are increasing with increasing permittivity. The curve 11 of an antenna loop without shunt shows a stronger increase compared to the curve 12 of an antenna loop with an inventive shunt structure.

### REFERENCES

- 1: antenna structure
- 2: surface
- 3: layer
- 4: central region
- 5: circular shape
- 6: shunt structure
- 7: area, arm
- 8: area, arm
- 9: linear part
- 10: diagram
- 11: curve
- 12: curve

## Claims

1. RFID device including an antenna structure (1) on the surface of a layer (3) of a tag or embedded into the layer (3) of a tag, the layer (3) of the tag having a predefined permittivity and the antenna (1) having a shunt structure (7, 8, 9), **characterized in that** the structure of the antenna (5) is a loop structure and the shunt structure (7,8,9) is located within the loop structure.

2. RFID device according to claim 1, **characterized in that** the shunt structure (7,8,9) contains a first area or arm (7) and a second area or arm (8) which are interconnected by means of a connection element (9).

3. RFID device according to claim 1 or 2, **characterized in that** the first area or arm (7) has a shape of a segment of a circle.

4. RFID device according to claim 1, 2 or 3, **characterized in that** the connection element between the first area or arm (7) and the second area or arm (8) has a shape of a straight line or linear part.

5. RFID device according to one of the claims 1, 2 or 3, **characterized in that** the first and/or second area or arm (7, 8) are located in the adjacent of the loop structure of the antenna.

6. RFID device according to at least one of the preceding claims, **characterized in that** the loop structure of the antenna has a shape of a circle.

7. RFID device according to at least one of the preceding claims, **characterized in that** the first and/or second area or arm (7, 8) of the shunt structure is coupled to the loop structure of the antenna by means of coupling using a capacitance coupling region.

8. RFID device according to at least one of the preceding claims, **characterized in that** the layer of the tag contains of a material of a varying permittivity.

9. RFID device according to at least one of the preceding claims, **characterized in that** the coupling using the capacitance coupling region is increasing with increasing permittivity of the material of the layer.
